# EUROPEAN PATENT APPLICATION

(11) **EP 4 170 285 A1**
(43) Date of publication of application: **26.04.2023**
(21) Application number: 22202211.3
(22) Date of filing: 18.10.2022
(51) Int. Cl.: G01C 21/30, G01C 21/00, G01C 5/06

(54) **METHOD AND APPARATUS FOR CONSTRUCTING THREE-DIMENSIONAL MAP IN HIGH-DEFINITION MAP, DEVICE AND STORAGE MEDIUM**

(30) Priority: 25.10.2021 CN 202111243173
(71) Applicant: Beijing Baidu Netcom Science Technology Co., Ltd., Beijing 100085 (CN)
(72) Inventor: LI, Chunxiao, Beijing, 100085 (CN); PENG, Weilin, Beijing, 100085 (CN); HUANG, Jie, Beijing, 100085 (CN); BAI, Yu, Beijing, 100085 (CN); PENG, Liang, Beijing, 100085 (CN)
(74) Representative: Pennacchio, Salvatore Giovanni

(57) **Abstract**

Provided are a method and apparatus for constructing a three-dimensional map in a high-definition map, a device and a storage medium. The method includes: acquiring (S110, S210, S310) vehicle trajectory data, where the vehicle trajectory data is three-dimensional trajectory data; matching (S120, S320) the vehicle trajectory data with a lane in a two-dimensional map and determining vehicle trajectory data matched with the lane; and assigning (S130, S250, S330) a height to the lane in the two-dimensional map according to the matched vehicle trajectory data to obtain a three-dimensional map. Construction efficiency of the three-dimensional map in the high-definition map can be improved, and a construction cost of the three-dimensional map in the high-definition map can be reduced.

## Description

### TECHNICAL FIELD

The present disclosure relates to the technical field of computers and, in particular, to autonomous driving, high-definition maps and intelligent transportation, specifically a method and apparatus for constructing a three-dimensional map in a high-definition map, an electronic device and a computer-readable storage medium.

### BACKGROUND

A high-definition map, also known as a highly accurate map, is used in self-driving cars. A high-definition map with accurate vehicle location information and rich road element data information can help an automobile to predict complex road surface information, such as a slope, a curvature and a heading, better avoiding potential risks. A three-dimensional map in the high-definition map is the key to achieve autonomous driving. A three-dimensional map with rich road element data information functions in constructing an overall memory and cognition of space similar to a human brain, which can help a vehicle to position and predict complex road surface information, better avoiding potential risks.

How to construct the three-dimensional map is an important issue in the industry.

### SUMMARY

The present disclosure provides a method and apparatus for constructing a three-dimensional map in a high-definition map, a device and a storage medium.

According to an aspect of the present disclosure, a method for constructing a three-dimensional map in a high-definition map is provided. The method includes the steps below.

Vehicle trajectory data is acquired, where the vehicle trajectory data is three-dimensional trajectory data.

The vehicle trajectory data is matched with a lane in a two-dimensional map, and vehicle trajectory data matched with the lane is determined.

A height is assigned to the lane in the two-dimensional map according to the matched vehicle trajectory data to obtain a three-dimensional map.

According to another aspect of the present disclosure, an apparatus for constructing a three-dimensional map in a high-definition map is provided. The apparatus includes a trajectory data acquisition unit, a trajectory matching unit and a height assignment unit.

The trajectory data acquisition unit is configured to acquire vehicle trajectory data, where the vehicle trajectory data is three-dimensional trajectory data.

The trajectory matching unit is configured to match the vehicle trajectory data with a lane in a two-dimensional map and determine vehicle trajectory data matched with the lane.

The height assignment unit is configured to assign a height to the lane in the two-dimensional map according to the matched vehicle trajectory data to obtain a three-dimensional map.

According to another aspect of the present disclosure, an electronic device is provided. The electronic device includes at least one processor and a memory communicatively connected to the at least one processor.

The memory stores an instruction executable by the at least one processor, and the instruction is executed by the at least one processor to cause the at least one processor to perform the method for constructing a three-dimensional map in a high-definition map according to any embodiment of the present disclosure.

According to another aspect of the present disclosure, a non-transitory computer-readable storage medium is provided. The storage medium stores a computer instruction for causing a computer to perform the method for constructing a three-dimensional map in a high-definition map according to any embodiment of the present disclosure.

According to another aspect of the present disclosure, a computer program product is provided. The computer program product includes a computer program which, when executed by a processor, implements the method for constructing a three-dimensional map in a high-definition map according to any embodiment of the present disclosure.

According to the technology of the present disclosure, construction efficiency of the three-dimensional map in the high-definition map can be improved, and a construction cost of the three-dimensional map in the high-definition map can be reduced.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the solution and not to limit the present disclosure.
FIG. 1 is a schematic diagram of a method for constructing a three-dimensional map in a high-definition map according to an embodiment of the present disclosure.
FIG. 2 is a schematic diagram of another method for constructing a three-dimensional map in a high-definition map according to an embodiment of the present disclosure.
FIG. 3 is a schematic diagram of another method for constructing a three-dimensional map in a high-definition map according to an embodiment of the present disclosure.
FIG. 4 is a schematic diagram of an apparatus for constructing a three-dimensional map in a high-definition map according to an embodiment of the present disclosure.
FIG. 5 is a block diagram of an electronic device for implementing a method for constructing a three-dimensional map in a high-definition map of an embodiment of the present disclosure.

### DETAILED DESCRIPTION

Example embodiments of the present disclosure, including details of embodiments of the present disclosure, are described hereinafter in conjunction with drawings to facilitate understanding. The example embodiments are illustrative only.

Solutions provided in embodiments of the present disclosure are described in detail hereinafter in conjunction with the drawings.

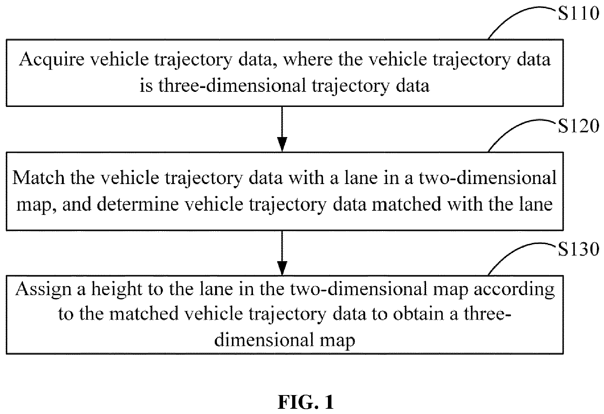

FIG. 1 is a schematic diagram of a method for constructing a three-dimensional map in a high-definition map according to an embodiment of the present disclosure. The embodiment of the present disclosure may be applicable to the case where the three-dimensional map is constructed using a two-dimensional map. The method may be performed by an apparatus for constructing a three-dimensional map in a high-definition map. The apparatus may be implemented by hardware and/or software and configured in an electronic device. Referring to FIG. 1, the method specifically includes the steps below.

In S110, vehicle trajectory data is acquired, where the vehicle trajectory data is three-dimensional trajectory data.

In S120, the vehicle trajectory data is matched with a lane in a two-dimensional map, and vehicle trajectory data matched with the lane is determined.

In S130, a height is assigned to the lane in the two-dimensional map according to the matched vehicle trajectory data to obtain the three-dimensional map.

In an embodiment of the present disclosure, the vehicle trajectory data may be a pose sequence of the collected vehicle over a collection time period. The pose sequence may include a collection timestamp, a position coordinate and an orientation of a collection sensor in the collected vehicle, where the position coordinate includes an abscissa, an ordinate and a height coordinate, that is, the position coordinate is a three-dimensional coordinate.

The two-dimensional map may be pre-constructed according to two-dimensional trajectory data, and the two-dimensional map may be a high-definition map, that is, a single road in the two-dimensional map may include multiple lanes. In the case where the two-dimensional map is a two-dimensional high-definition map, the subsequently constructed three-dimensional map is a three-dimensional high-definition map. Compared with an ordinary map, the high-definition map is added with a large amount of geometric information, lane information and traffic sign information. The high-definition map has as many as two or three hundred map elements and map attributes, and the accuracy is at a centimeter level, which is the key to achieve autonomous driving.

In an embodiment of the present disclosure, the vehicle trajectory data matched with the lane may be determined according to a matching relationship between the vehicle trajectory data and the lane in the two-dimensional map, and the vehicle trajectory data matched with the lane may be used for assigning the height to the lane in the two-dimensional map. That is, for any lane in the two-dimensional map, matching relationship between the lane and each of the at least two vehicle trajectory lines in the vehicle trajectory data may be separately determined, a vehicle trajectory line belonging to the lane may be determined according to the matching relationships, and a height of the vehicle trajectory line belonging to the lane may be used as a height of the lane. The height of the lane is used for converting the two-dimensional map to a three-dimensional map. The vehicle trajectory data is used for assigning the height to the lane in the two-dimensional map to obtain data of the three-dimensional map, and the two-dimensional map is converted to the three-dimensional map. Compared with the case where three-dimensional point cloud data is collected through a radar sensor and the three-dimensional map is constructed based on the three-dimensional point cloud data, construction efficiency of the three-dimensional map can be improved, and a construction cost of the three-dimensional map can be reduced, achieving large-scale automatic construction of the three-dimensional map in a complex scenario in which the height may be changed.

In a process of assigning the height to the lane, a trajectory point closest to a data point in the lane may be searched from the vehicle trajectory data matched with the lane, and the closest trajectory point is used for assigning a height to the data point. It is to be noted that in the case where a single road includes multiple lanes, the vehicle trajectory data matched with any lane in the road may be used for concurrently assigning a height to each lane in the road, thereby reducing an amount of calculation and improving calculation efficiency. This calculation manner can ensure accuracy of a longitudinal slope in the road. In the autonomous driving scenario, since the dependence on a horizontal slope is far less than the dependence on the longitudinal slope, an effect on the autonomous driving scenario is relatively small. In addition, the height of each lane in the single road may be separately assigned to ensure accuracy of the horizontal slope in the road.

In the technical solution of the embodiment of the present disclosure, the height is assigned to the lane in the two-dimensional map according to the matching relationship between the lane in the two-dimensional map and the three-dimensional vehicle trajectory data, the construction efficiency of the three-dimensional map is improved, and the construction cost of the three-dimensional map is reduced.

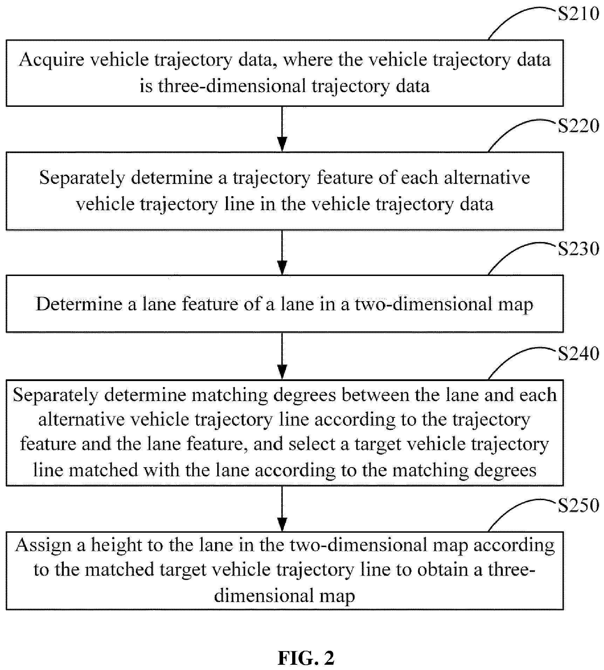

FIG. 2 is a schematic diagram of another method for constructing a three-dimensional map in a high-definition map according to an embodiment of the present disclosure. The present embodiment is an optional solution provided based on the preceding embodiment. Referring to FIG. 2, the method for constructing a three-dimensional map in a high-definition map according to the present embodiment includes the steps below.

In S210, vehicle trajectory data is acquired, where the vehicle trajectory data is three-dimensional trajectory data.

In S220, a trajectory feature of each alternative vehicle trajectory line in the vehicle trajectory data is separately determined.

In S230, a lane feature of a lane in a two-dimensional map is determined.

In S240, matching degrees between the lane and the at least two alternative vehicle trajectory lines are separately determined according to the trajectory feature of each alternative vehicle trajectory line and the lane feature of the lane, and a target vehicle trajectory line matched with the lane is selected from the at least two alternative vehicle trajectory lines according to the matching degrees.

In S250, a height is assigned to the lane in the two-dimensional map according to the matched target vehicle trajectory line to obtain a three-dimensional map.

The vehicle trajectory data may include multiple alternative vehicle trajectory lines, where a trajectory feature of the alternative trajectory line is determined by a sequence of trajectory points included in the alternative trajectory line for trajectory line characterization and differentiation of the alternative trajectory line, and the trajectory features of at least two alternative trajectory lines may be different. The trajectory feature may include a trajectory position. The lane feature of the lane is used for characterization and differentiation of the lane, and the lane features of the lanes may be different. The lane feature may include an orientation of the lane and a predecessor-successor relationship between adjacent lanes.

Specifically, for any lane, matching degrees between at least two alternative vehicle trajectory lines and the lane may be separately determined according to a lane feature of the lane and trajectory features of the at least two alternative vehicle trajectory lines, the at least two alternative vehicle trajectory lines are sorted according to the matching degrees, and an alternative vehicle trajectory line with a relatively large matching degree is selected as a target vehicle trajectory line of the lane according to a sorting result. The target vehicle trajectory line of the lane may be a vehicle trajectory line located in the lane. The matching degree between the lane and the alternative vehicle trajectory line is determined according to the trajectory feature of the alternative vehicle trajectory line and the lane feature of the lane, improving accuracy of a matching relationship between the lane and the alternative vehicle trajectory line and accuracy of the height assigned to the lane.

In an optional implementation, the trajectory feature of the alternative vehicle trajectory line includes at least one of an orientation and a curvature of the alternative vehicle trajectory line and an included angle between adjacent trajectory lines, and the lane feature of the lane includes at least one of an orientation and a curvature of the lane and an included angle between adjacent lanes.

The orientation of the alternative vehicle trajectory line may be determined according to positions of a first trajectory point and a last trajectory point in the alternative vehicle trajectory line, and the orientation of the lane may be determined according to positions of a first lane point and a last lane point in the lane. The included angle between adjacent lanes may include an included angle between a current lane and a predecessor lane and an included angle between the current lane and a successor lane. The current lane may be any lane to be matched, the predecessor lane is a lane located in front of and adjacent to the current lane in a driving direction along the lane, and the successor lane is a lane located behind and adjacent to the current lane in the driving direction along the lane. The lane feature of the lane may include an orientation and a curvature of the current lane, an orientation and a curvature of the predecessor lane, an orientation and a curvature of the successor lane, an angle between the current lane and the predecessor lane and an angle between the current lane and the successor lane.

Specifically, the orientation of the alternative vehicle trajectory line and the orientation of the lane may be matched to obtain a first matching relationship, the curvature of the alternative vehicle trajectory line and the curvature of the lane may be matched to obtain a second matching relationship, the included angle between adjacent trajectory lines and the included angle between adjacent lanes may be matched to obtain a third matching relationship, and a matching result between the alternative vehicle trajectory line and the lane may be determined in conjunction with the first matching relationship, the second matching relationship and the third matching relationship. The orientation and the curvature of the alternative vehicle trajectory line and the included angle between adjacent trajectory lines are matched with the orientation and the curvature of the lane and the included angle between adjacent lanes, respectively, further improving the accuracy of the matching degree between the lane and the alternative vehicle trajectory line and improving the accuracy of the target vehicle trajectory line.

In an optional implementation, before the target vehicle trajectory line matched with the lane is selected from the at least two alternative vehicle trajectory lines according to the matching degree, alternative vehicle trajectory lines in the vehicle trajectory data are screened according to a position of the lane.

Specifically, a lane region may be determined according to the position of the lane. For example, a fixed-size rectangular region where a centerline of the lane is located may be used as the lane region. For each alternative vehicle trajectory line, it may be determined whether the alternative vehicle trajectory line is located in the lane region according to a position of a trajectory point in the alternative vehicle trajectory line. An alternative vehicle trajectory line located outside the lane region may be eliminated, and an alternative vehicle trajectory line located in the lane region may be reserved. The alternative vehicle trajectory lines are screened, reducing the number of alternative vehicle trajectory lines, reducing computational complexity between the lane and the alternative vehicle trajectory line and improving determination efficiency of the target vehicle trajectory line.

It is to be noted that if any lane is associated with a unique alternative vehicle trajectory line, the associated alternative vehicle trajectory line may be directly used as the target vehicle trajectory line matched with the lane, and the lane being matched with the unique alternative vehicle trajectory line is not needed, that is, the lane feature of the lane being matched with a trajectory feature of the unique alternative vehicle trajectory line is not needed.

In the technical solution of the embodiment of the present disclosure, the target vehicle trajectory line matched with the lane is determined in conjunction with the trajectory feature of the alternative vehicle trajectory line and the lane feature of the lane, improving the accuracy of the target vehicle trajectory line, the accuracy of the height assigned to the lane and the accuracy of the three-dimensional map.

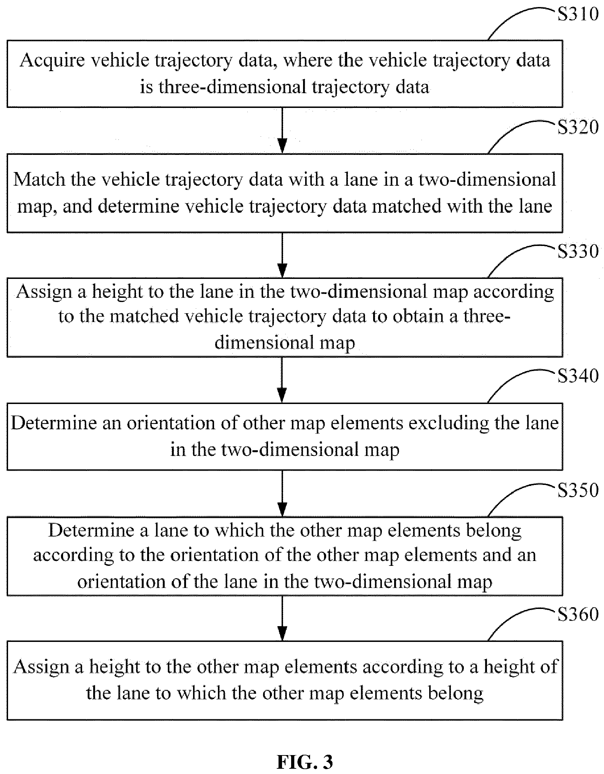

FIG. 3 is a schematic diagram of another method for constructing a three-dimensional map in a high-definition map according to an embodiment of the present disclosure. The present embodiment is an optional solution provided based on the preceding embodiment. Referring to FIG. 3, the method for constructing a three-dimensional map in a high-definition map according to the present embodiment includes the steps below.

In S310, vehicle trajectory data is acquired, where the vehicle trajectory data is three-dimensional trajectory data.

In S320, the vehicle trajectory data is matched with a lane in a two-dimensional map, and vehicle trajectory data matched with the lane is determined.

In S330, a height is assigned to the lane in the two-dimensional map according to the matched vehicle trajectory data to obtain a three-dimensional map.

In S340, an orientation of other map elements excluding the lane in the two-dimensional map is determined.

In S350, a lane to which the other map elements belong is determined according to the orientation of the other map elements and an orientation of the lane in the two-dimensional map.

In S360, a height to the other map elements is assigned according to a height of the lane to which the other map elements belong.

The other map elements may be map elements located on a ground of the lane, such as crosswalks, no-parking zones and ground arrows on the ground. The orientation of the other map elements may be a positive direction of a geometric region to which the other map elements belong, and the orientation of the lane may be a positive direction of a geometric region to which the lane belongs. According to a matching relationship between the orientation of the other map elements and the orientation of the lane, a lane whose orientation is consistent with the positive direction of the other map elements may be determined and used as the lane to which the other map elements belong, and the height of the lane to which the other map elements belong may be used as the height of the other map elements, that is, the height of the lane may be used for assigning the height to the other map elements. The height of the lane is used for assigning the height to the other map elements, improving accuracy of the height of the other map elements in the three-dimensional map and enriching the map elements in the three-dimensional map.

In an optional implementation, after the height is assigned to the lane in the two-dimensional map according to the matched vehicle trajectory data to obtain the three-dimensional map, the step below is further included: smoothing processing is performed on the height of the lane in the three-dimensional map based on a sliding window.

Since the height is calculated separately for each lane, a height of a joint of two lanes connected in a manner of front-back connection may be not smooth. After the height is assigned to the lane, the smoothing processing is performed on the height of the lane to obtain a result data of the three-dimensional map with relatively high accuracy and smoothness. Specifically, the sliding window may be used for calculating an average value of heights of joints of different lanes. The average value of the heights is used instead of the original heights of the joints for smoothing the height.

In the technical solution of the embodiment of the present disclosure, the height of the lane is used for assigning the height to the other map elements to obtain other map elements which are three-dimensional. Moreover, the smoothing processing is performed on the height of the lane so that quality of the three-dimensional map is improved.

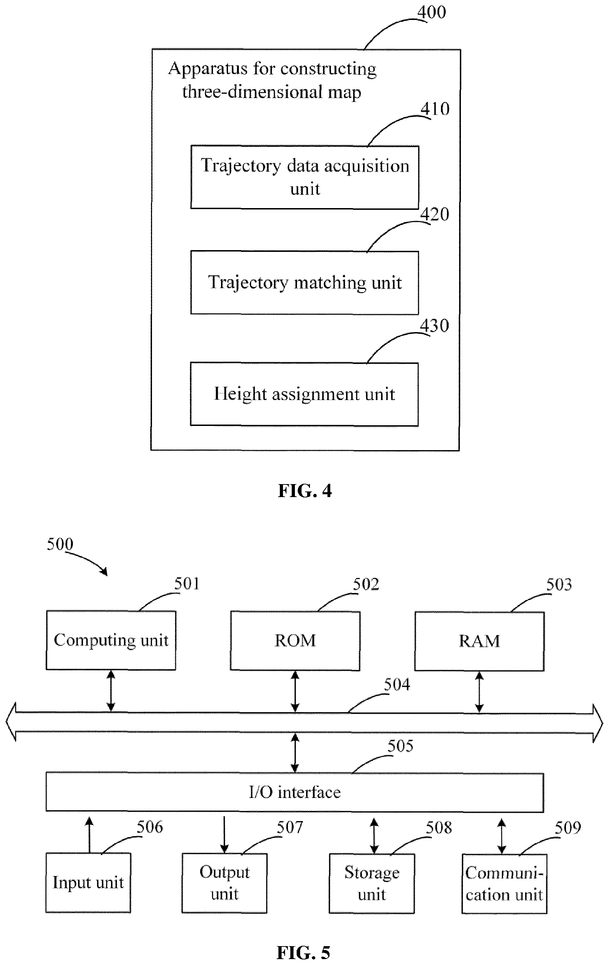

FIG. 4 is a schematic diagram of an apparatus for constructing a three-dimensional map in a high-definition map according to an embodiment of the present disclosure. The embodiment of the present disclosure may be applicable to the case where the three-dimensional map is constructed by using a two-dimensional map. The apparatus is configured in an electronic device and can implement the method for constructing a three-dimensional map in a high-definition map according to any embodiment of the present disclosure. Referring to FIG.4, an apparatus 400 for constructing a three-dimensional map in a high-definition map specifically includes a trajectory data acquisition unit 410, a trajectory matching unit 420 and a height assignment unit 430.

The trajectory data acquisition unit 410 is configured to acquire vehicle trajectory data, where the vehicle trajectory data is three-dimensional trajectory data.

The trajectory matching unit 420 is configured to match the vehicle trajectory data with a lane in a two-dimensional map and determine vehicle trajectory data matched with the lane.

The height assignment unit 430 is configured to assign a height to the lane in the two-dimensional map according to the matched vehicle trajectory data to obtain a three-dimensional map.

In an optional implementation, the trajectory matching unit 420 includes a trajectory feature unit, a lane feature unit and a trajectory matching unit.

The trajectory feature unit is configured to separately determine trajectory features of at least two alternative vehicle trajectory lines in the vehicle trajectory data.

The lane feature unit is configured to determine a lane feature of the lane in the two-dimensional map.

The trajectory matching unit is configured to separately determine matching degrees between the lane and the at least two alternative vehicle trajectory lines according to the trajectory features of the at least two alternative vehicle trajectory lines and the lane feature of the lane and select a target vehicle trajectory line matched with the lane from the at least two alternative vehicle trajectory lines according to the matching degrees.

In an optional implementation, the trajectory features of the at least two alternative vehicle trajectory lines include at least one of orientations and curvatures of the at least two alternative vehicle trajectory lines and an included angle between adjacent trajectory lines.

The lane feature of the lane includes at least one of an orientation and a curvature of the lane and an included angle between adjacent lanes.

In an optional implementation, the trajectory matching unit 420 further includes a trajectory screening unit.

The trajectory screening unit is configured to screen, before selecting the target vehicle trajectory line matched with the lane from the at least two alternative vehicle trajectory lines according to the matching degree, alternative vehicle trajectory lines in the vehicle trajectory data according to a position of the lane.

In an optional implementation, the apparatus 400 for constructing a three-dimensional map in a high-definition map further includes another element unit. The other element unit includes another element orientation unit, a lane determination unit and another height unit.

The other element orientation unit is configured to determine an orientation of other map elements excluding the lane in the two-dimensional map.

The lane determination unit is configured to determine a lane to which the other map elements belong according to the orientation of the other map elements and an orientation of the lane in the two-dimensional map.

The other height unit is configured to assign a height to the other map elements according to a height of the lane to which the other map elements belong.

In an optional implementation, the apparatus 400 for constructing a three-dimensional map in a high-definition map further includes a smoothing unit.

The smoothing unit is configured to perform smoothing processing on the height of the lane in the three-dimensional map based on a sliding window.

In the technical solution of the present embodiment, to convert the two-dimensional map to the three-dimensional map based on the vehicle trajectory data, some existing production results of the two-dimensional map may be used and automatically convert to a three-dimensional high-definition map. Moreover, a two-dimensional high-definition map has a relatively low production cost. Through means such as lane line recognition technology or manual annotation, a production speed of the two-dimensional high-definition map is much faster than that of the three-dimensional high-definition map. Then, the two-dimensional high-definition map is automatically assigned a reasonable height according to a trajectory height in the vehicle trajectory data, and data of the two-dimensional map is directly converted to data of the three-dimensional map with no additional annotation work being added. The two-dimensional high-definition map can still be produced on a large scale, and the three-dimensional high-definition map can still be automatically generated on a large scale in a highly variable complex scenario.

Operations, including acquisition, storage, and application, on a user's personal information involved in the solution of the present disclosure conform to relevant laws and regulations and do not violate the public policy doctrine.

According to an embodiment of the present disclosure, the present disclosure further provides an electronic device, a readable storage medium and a computer program product.

FIG. 5 is a block diagram of an example electronic device 500 that may be configured to implement an embodiment of the present disclosure. The electronic device is intended to represent various forms of digital computers, for example, a laptop computer, a desktop computer, a workbench, a personal digital assistant, a server, a blade server, a mainframe computer, or another applicable computer. The electronic device may also represent various forms of mobile apparatuses, for example, a personal digital assistant, a cellphone, a smartphone, a wearable device, or a similar computing apparatus. Herein the shown components, the connections and relationships between these components, and the functions of these components are illustrative only and are not intended to limit the implementation of the present disclosure as described and/or claimed herein.

As shown in FIG. 5, the device 500 includes a computing unit 501. The computing unit 501 may perform various types of appropriate operations and processing based on a computer program stored in a read-only memory (ROM) 502 or a computer program loaded from a storage unit 508 to a random-access memory (RAM) 503. Various programs and data required for operations of the device 500 may also be stored in the RAM 503. The computing unit 501, the ROM 502, and the RAM 503 are connected to each other through a bus 504. An input/output (I/O) interface 505 is also connected to the bus 504.

Multiple components in the device 500 are connected to the I/O interface 505. The components include an input unit 506 such as a keyboard and a mouse, an output unit 507 such as various types of displays and speakers, the storage unit 508 such as a magnetic disk and an optical disk, and a communication unit 509 such as a network card, a modem and a wireless communication transceiver. The communication unit 509 allows the device 500 to exchange information/data with other devices over a computer network such as the Internet and/or various telecommunications networks.

The computing unit 501 may be various general-purpose and/or special-purpose processing components having processing and computing capabilities. Some examples of the computing unit 501 include, but are not limited to, central processing units (CPUs), graphics processing units (GPUs), various specialized artificial intelligence (AI) computing chips, various computing units executing machine learning models and algorithms, digital signal processors (DSPs) and any appropriate processors, controllers, microcontrollers. The computing unit 501 executes various preceding methods and processing, such as the method for constructing a three-dimensional map in a high-definition map. For example, in some embodiments, the method for constructing a three-dimensional map in a high-definition map may be implemented as a computer software program tangibly contained in a machine-readable medium such as the storage unit 508. In some embodiments, part or all of the computer program may be loaded and/or installed on the device 500 via the ROM 502 and/or the communication unit 509. When the computer program is loaded into the RAM 503 and executed by the computing unit 501, one or more steps of the method for constructing a three-dimensional map in a high-definition map can be performed. Alternatively, in other embodiments, the computing unit 501 may be configured, in any other suitable manner (for example, by use of firmware), to execute the method for constructing a three-dimensional map in a high-definition map.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SOCs), complex programmable logic devices (CPLDs), computer hardware, firmware, software and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus, and at least one output apparatus and transmitting the data and instructions to the memory system, the at least one input apparatus, and the at least one output apparatus.

Program codes for implementation of the methods of the present disclosure may be written in one programming language or any combination of multiple programming languages. The program codes may be provided for the processor or controller of a general-purpose computer, a special-purpose computer, or another programmable data processing apparatus to enable functions/operations specified in flowcharts and/or block diagrams to be implemented when the program codes are executed by the processor or controller. The program codes may be executed entirely on a machine, partly on a machine, as a stand-alone software package, partly on a machine and partly on a remote machine, or entirely on a remote machine or a server.

In the context of the present disclosure, the machine-readable medium may be a tangible medium that may include or store a program that is used by or in conjunction with a system, apparatus or device that executes instructions. The machine-readable medium may be a machine-readable signal medium or a machine-readable storage medium. The machine-readable medium may include, but is not limited to, an electronic, magnetic, optical, electromagnetic, infrared or semiconductor system, apparatus or device or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device or any suitable combination thereof.

In order that interaction with a user is provided, the systems and techniques described herein may be implemented on a computer. The computer has a display device (for example, a cathode-ray tube (CRT) or a liquid-crystal display (LCD) monitor) for displaying information to the user and a keyboard and a pointing device (for example, a mouse or a trackball) through which the user can provide input to the computer. Other types of apparatuses may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network and the Internet.

The computing system may include clients and servers. The clients and the servers are usually far away from each other and generally interact through the communication network. The relationship between the client and the server arises by virtue of computer programs running on respective computers and having a client-server relationship to each other. The server may be a cloud server, also referred to as a cloud computing server or a cloud host, which is a host product in a cloud computing service system, so as to solve the defects of difficult management and weak traffic scalability in traditional physical hosts and VPS services.

It is to be understood that various forms of the preceding flows may be used, with steps reordered, added or removed. For example, the steps described in the present disclosure may be executed in parallel, in sequence or in a different order as long as the desired results of the technical solutions disclosed in the present disclosure is achieved. The execution sequence of these steps is not limited herein.

## Claims

1. A method for constructing a three-dimensional map in a high-definition map, comprising:
acquiring (S110, S210, S310) vehicle trajectory data, wherein the vehicle trajectory data is three-dimensional trajectory data;
matching (S120, S320) the vehicle trajectory data with a lane in a two-dimensional map and determining vehicle trajectory data matched with the lane; and
assigning (S130, S250, S330) a height to the lane in the two-dimensional map according to the matched vehicle trajectory data to obtain the three-dimensional map.

2. The method according to claim 1, wherein matching the vehicle trajectory data with the lane in the two-dimensional map and determining the vehicle trajectory data matched with the lane comprises:
separately determining (S220) a trajectory feature of each of at least two alternative vehicle trajectory lines in the vehicle trajectory data;
determining (S230) a lane feature of the lane in the two-dimensional map; and
separately determining (S240) matching degrees between the lane and the at least two alternative vehicle trajectory lines according to the trajectory feature of each alternative vehicle trajectory line and the lane feature of the lane, and selecting a target vehicle trajectory line matched with the lane from the at least two alternative vehicle trajectory lines according to the matching degrees.

3. The method according to claim 2, wherein
the trajectory feature of each alternative vehicle trajectory line comprises at least one of: an orientation of each alternative vehicle trajectory line, a curvature of each alternative vehicle trajectory line, or an included angle between adjacent vehicle trajectory lines; and
the lane feature of the lane comprises at least one of: an orientation of the lane, a curvature of the lane, or an included angle between adjacent lanes.

4. The method according to claim 2, before selecting the target vehicle trajectory line matched with the lane from the at least two alternative vehicle trajectory lines according to the matching degree, further comprising:
filtering alternative vehicle trajectory lines in the vehicle trajectory data according to a position of the lane.

5. The method according to claim 1, after assigning the height to the lane in the two-dimensional map according to the matched vehicle trajectory data, further comprising:
determining (S340) an orientation of other map elements excluding the lane in the two-dimensional map;
determining (S350) a lane to which the other map elements belong according to the orientation of the other map elements and an orientation of the lane in the two-dimensional map; and
assigning (S360) a height to the other map elements according to a height of the lane to which the other map elements belong.

6. The method according to claim 1, after assigning the height to the lane in the two-dimensional map according to the matched vehicle trajectory data to obtain the three-dimensional map, further comprising:
performing smoothing processing on the height of the lane in the three-dimensional map based on a sliding window.

7. An apparatus (400) for constructing a three-dimensional map in a high-definition map, comprising:
a trajectory data acquisition unit (410), which is configured to acquire vehicle trajectory data, wherein the vehicle trajectory data is three-dimensional trajectory data;
a trajectory matching unit (420), which is configured to match the vehicle trajectory data with a lane in a two-dimensional map and determine vehicle trajectory data matched with the lane; and
a height assignment unit (430), which is configured to assign a height to the lane in the two-dimensional map according to the matched vehicle trajectory data to obtain the three-dimensional map.

8. The apparatus according to claim 7, wherein the trajectory matching unit comprises:
a trajectory feature unit, which is configured to separately determine a trajectory feature of each of at least two alternative vehicle trajectory lines in the vehicle trajectory data;
a lane feature unit, which is configured to determine a lane feature of the lane in the two-dimensional map; and
a trajectory matching unit, which is configured to separately determine matching degrees between the lane and the at least two alternative vehicle trajectory lines according to the trajectory features of the at least two alternative vehicle trajectory lines and the lane feature of the lane and select a target vehicle trajectory line matched with the lane from the at least two alternative vehicle trajectory lines according to the matching degrees.

9. The apparatus according to claim 8, wherein the trajectory features of each alternative vehicle trajectory line comprises at least one of an orientation of each alternative vehicle trajectory line, a curvature of each alternative vehicle trajectory line, or an included angle between adjacent vehicle trajectory lines; and
the lane feature of the lane comprises at least one of: an orientation of the lane, a curvature of the lane, or an included angle between adjacent lanes.

10. The apparatus according to claim 8, wherein the trajectory matching unit further comprises:
a trajectory filtering unit, which is configured to, before selecting the target vehicle trajectory line matched with the lane from the at least two alternative vehicle trajectory lines according to the matching degree, filter alternative vehicle trajectory lines in the vehicle trajectory data according to a position of the lane.

11. The apparatus according to claim 7, further comprising another element unit, wherein the other element unit comprises:
another element orientation unit, which is configured to determine an orientation of other map elements excluding the lane in the two-dimensional map;
a lane determination unit, which is configured to determine a lane to which the other map elements belong according to the orientation of the other map elements and an orientation of the lane in the two-dimensional map; and
another height unit, which is configured to assign a height to the other map elements according to a height of the lane to which the other map elements belong.

12. The apparatus according to claim 7, further comprising:
a smoothing unit, which is configured to perform smoothing processing on the height of the lane in the three-dimensional map based on a sliding window.

13. An electronic device, comprising:
at least one processor; and
a memory communicatively connected to the at least one processor, wherein
the memory stores an instruction executable by the at least one processor, and the instruction is executed by the at least one processor to cause the at least one processor to perform the method according to any one of claims 1 to 6.

14. A computer-readable storage medium storing a computer instruction for causing a computer to perform the method according to any one of claims 1 to 6.

15. A computer program product, comprising a computer program which, when executed by a processor, implements the method according to any one of claims 1 to 6.
